# EUROPÄISCHE PATENTANMELDUNG

(11) **EP 1 932 742 A2**
(43) Veröffentlichungstag der Anmeldung: **18.06.2008**
(21) Anmeldenummer: 07118537.5
(22) Anmeldetag: 16.10.2007
(51) Int. Cl.: B60W 30/14, G01C 21/26

(54) **Verfahren für ein Fahrerassistenzsystem und Fahrerassistenzsystem**

(30) Priorität: 14.12.2006 DE 102006059068
(71) Anmelder: ROBERT BOSCH GMBH, 70442 Stuttgart (DE)
(72) Erfinder: Simon, Stephan, 31079 Sibbesse (DE)

(57) **Zusammenfassung**

Es wird ein Verfahren für ein Fahrerassistenzsystem für den Fahrer eines Kraftfahrzeuges offenbart, bei dem in einer Umgebung des Kraftfahrzeuges Fahrspuren und Objekte erfasst, die Fahrspuren und die Objekte einander zugeordnet werden und eine Relevanz der Fahrspuren und der Objekte in Bezug auf das Kraftfahrzeug bestimmt wird. Erfindungsgemäß ist vorgesehen, dass für die Bestimmung der Relevanz der einzelnen Objekte eine tatsächliche Veränderung oder eine wahrscheinliche Veränderung der Zuordnung des Objektes zu einer bestimmten Fahrspur berücksichtigt wird. Ferner wird ein Fahrerassistenzsystem zur Durchführung des erfindungsgemäßen Verfahrens offenbart.

## Beschreibung

Die Erfindung betrifft ein Verfahren für ein Fahrerassistenzsystem eines Kraftfahrzeuges, bei dem in einer Umgebung des Kraftfahrzeuges Fahrspuren und Objekte erfasst, die Fahrspuren und die Objekte einander zugeordnet werden und eine Relevanz der Fahrspuren und der Objekte in Bezug auf das Kraftfahrzeug bestimmt wird.

Die Erfindung betrifft ferner ein Fahrerassistenzsystem für ein Kraftfahrzeug mit Sensoren zur Erfassung von Fahrspuren und Objekten in einer Umgebung des Kraftfahrzeuges, einer Datenverarbeitungseinheit, die eingerichtet ist, die Fahrspuren und die Objekte einander zuzuordnen und eine Relevanz der Fahrspuren und Objekte in Bezug auf das Kraftfahrzeug zu bestimmen.

Um einen Fahrer bei der Führung und Steuerung eines Kraftfahrzeuges zu unterstützen und um möglicherweise einen Unfall zu vermeiden, zumindest die Unfallschäden und - folgen für alle Beteiligten zu minimieren, wurden in jüngerer Zeit Fahrerassistenzsysteme zum Einsatz in Kraftfahrzeugen entwickelt. Ein Beispiel hierfür ist eine adaptive Geschwindigkeitsregelung ACC (Adaptive Cruise Control), die in ihrer Grundfunktion auf der konventionellen Fahrgeschwindigkeitsregelung basiert, die üblicherweise mit Tempomat bezeichnet wird und die eine von dem Fahrer vorgegebene und gewünschte Fahrgeschwindigkeit einhält.

Darüber hinaus kann die adaptive Geschwindigkeitsregelung durch selbsttätiges Beschleunigen, Gas wegnehmen oder aktives Bremsen automatisch die Geschwindigkeit des Kraftfahrzeuges auch wechselnden Verkehrsbedingungen in der Fahrzeugumgebung anpassen. Dieses System erlaubt damit die Einhaltung eines bestimmten und von der Höhe der Geschwindigkeit abhängigen Abstandes zu einem anderen, vorausfahrenden Kraftfahrzeug.

Ein wesentlicher Aspekt ist dabei die Fähigkeit des Kraftfahrzeuges, seine Umgebung sensorisch zu erfassen und die Sensordaten zu interpretieren, um anhand der Sensordaten insbesondere kritische Situationen erkennen zu können, damit anschließend durch entsprechend generierte Steuersignale auf die Fahrzeugführung ein Einfluss ausgeübt werden kann.

In der DE 102 53 510 A1 sind eine Vorrichtung und ein Verfahren zur Verbesserung der Sicht in einem Kraftfahrzeug mit einem infrarotempfindlichen Bildsensorsystem offenbart. Dort ist beschrieben, dass über ein Signalisierungsmittel, beispielsweise einen Monitor oder ein Head-Up-Display, dem Fahrer des Kraftfahrzeuges Fahrerinformationen über den Fahrbahnverlauf und/oder Objekte in der Umgebung des Kraftfahrzeuges angezeigt werden. Die Anzeige der Fahrerinformationen erfolgt dabei in Abhängigkeit des Fahrbahnverlaufes, der durch Fahrbahnmarkierungen, beispielsweise Leitpfosten und/oder Fahrspurlinien, festgesetzt ist.

In der DE 101 31 720 A1 wird ein Head-Up-Display-System, insbesondere zur Anwendung in einem Navigationssystem und einem System zur adaptiven Geschwindigkeitsregulierung, sowie ein entsprechendes Verfahren offenbart, mit dem Objekte im Fahrzeugaußenraum für einen oder mehrere Insassen eines Fahrzeugs derart dargestellt werden, dass die Objekte an der korrekten Position wahrgenommen werden. Der betreffende Insasse des Fahrzeuges blickt dabei durch Head-Up-Display wie durch eine Brille auf den realen Fahrzeugaußenraum. Unter anderem kann auch die Position der Fahrbahn mit entsprechenden Markierungen auf dem Head-Up-Display angezeigt werden, um beispielsweise bei einem drohenden Verlassen der Fahrbahn einen zusätzlichen Warnhinweis anzuzeigen.

Vor diesem Hintergrund ist es die Aufgabe der vorliegenden Erfindung, die Unterstützung des Fahrers beim Führen eines Kraftfahrzeuges durch Fahrerassistenzsysteme weiter zu verbessern.

Diese Aufgabe wird durch ein Verfahren mit den Merkmalen gemäß Anspruch 1 sowie durch ein Fahrerassistenzsystem mit den Merkmalen gemäß Anspruch 8 gelöst.

Bei einem Verfahren der eingangs beschriebenen Art ist erfindungsgemäß vorgesehen, dass für die Bestimmung der Relevanz der einzelnen Objekte eine tatsächliche Veränderung oder eine wahrscheinliche Veränderung der Zuordnung des Objektes zu einer bestimmten Fahrspur berücksichtigt wird. Bei einem gattungsgemäßen Fahrerassistenzsystem ist die Datenverarbeitungseinrichtung eingerichtet, für die Bestimmung der Relevanz der einzelnen Objekte eine tatsächliche Veränderung oder eine wahrscheinliche Veränderung der Zuordnung des Objektes zu einer bestimmten Fahrspur zu berücksichtigen.

Im Folgenden ist der Begriff Fahrspur nicht auf die straßenbauartlich festgelegte Fahrbahn eingeschränkt. Vielmehr wird unter Fahrspur verallgemeinert auch die von dem Kraftfahrzeug mit dem erfindungsgemäßen Fahrerassistenzsystem befahrene Fläche verstanden, die genauso genommen den Verlauf der wahrscheinlich befahren Fläche angibt und von der bauartlichen Fahrbahn abweichen kann.

Der Kern der Erfindung besteht darin, dass erfasste Fahrspuren und Objekte nicht nur in Bezug auf das Kraftfahrzeug in Bezug gesetzt werden, beispielsweise um eine Spurhaltung oder eine Abstandsregulierung auszuführen, sondern tatsächliche oder wahrscheinliche Veränderungen der Verkehrssituation, beispielsweise ein Fahrbahnwechsel eines relevanten Objektes bei einem Überholvorgang, zusätzlich erkannt und berücksichtigt werden.

In vorteilhafter Weise werden in Abhängigkeit der bestimmten Relevanz Steuersignale erzeugt. Somit kann das Fahrerassistenzsystem aufgrund der zusätzlichen Information auf die Führung des Kraftfahrzeuges Einfluss nehmen.

Um den Fahrer über die zusätzliche Information in Kenntnis zu setzen, werden vorteilhaft mittels einer Anzeigevorrichtung die für das Kraftfahrzeug relevanten Fahrspuren und Objekte dargestellt.

Bevorzugt wird bei der Zuordnung eine relative laterale Lage des Objektes zu der bestimmten Fahrspur berücksichtigt. Bei einer erfassten lateralen Ausdehnung des Objektes kann als ein Maß für die relative laterale Lage eine Überlappung der lateralen Ausdehnung des Objektes mit der Fahrspur vorgesehen sein.

Ebenfalls bevorzugt wird bei der Zuordnung eine relative laterale Geschwindigkeit des Objektes zu der bestimmten Fahrspur berücksichtigt. Weiterhin bevorzugt wird bei der Zuordnung eine relative laterale Beschleunigung des Objektes zu der bestimmten Fahrspur berücksichtigt. Durch die Berücksichtigung der lateralen Geschwindigkeit und/oder der lateralen Beschleunigung kann die Relevanz eines Objektes bereits überprüft und gegebenenfalls angepasst werden, bevor die Änderung bei der Zuordnung der Fahrspur stattgefunden hat.

In vorteilhafter Weise wird bei der Zuordnung ein von dem Objekt ausgehendes optisches Signal berücksichtigt. Dieses optische Signal kann beispielsweise das Aufleuchten eines Bremslichtes oder das Blinken eines Fahrtrichtungsanzeigers sein.

Bei einem erfindungsgemäßen Fahrerassistenzsystem weist die Anzeigevorrichtung in vorteilhafter Weise einen Bildschirm, ein Head-Up-Display und/oder einen Frontscheibenprojektor auf.

Zur Erfassung der Umgebung ist vorgesehen, dass die Sensoren mindestens einen Videosensor, einen Infrarotsensor, einen Radarsensor, einen Lidarsensor, einen Ultraschallsensor, einen Sensor zur Lichtlaufzeitmessung und/oder einen PMD-Sensor (Photonic Mixing Device) aufweisen.

Nachfolgend wird die Erfindung anhand einer detaillierten Beschreibung einer Ausführungsform unter Bezug auf die beigefügten Zeichnungen beispielhaft näher erläutert, in denen
- Figur 1: eine schematische Skizze des erfindungsgemäßen Fahrerassistenzsystems zeigt, und
- Figur 2: eine beispielhafte Anzeige zeigt.

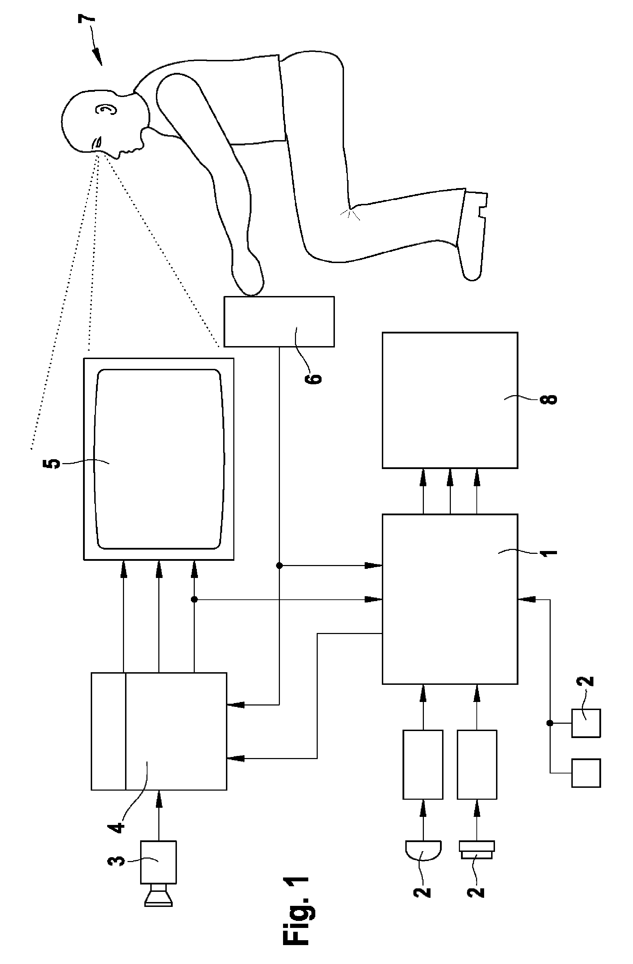

Figur 1 zeigt schematisch skizziert ein erfindungsgemäßes Fahrerassistenzsystem mit einer Datenverarbeitungseinheit 1 als zentrales Kernelement. Die Datenverarbeitungseinheit 1 ist mit Sensoren 2 zur Erfassung der Fahrzeugumgebung verbunden, von denen sie entsprechende Sensordaten empfängt. Ferner ist eine Videokamera 3 zur Aufnahme eines Videobildes vorgesehen. Die Videokamera 3 sendet die erfassten Bilddaten an ein Grafikmodul 4, das für die Bildinterpretation bzw. Bildanalyse und die Bildaufbereitung zuständig ist.

Obwohl in der Figur 1 die Datenverarbeitungseinheit 1 und das Grafikmodul 4 getrennt voneinander dargestellt sind, kann das Grafikmodul 4 alternativ in der Datenverarbeitungseinheit 1 integriert sein, beispielsweise als entsprechendes Programmmodul. Weiter Konfigurationen sind ebenfalls denkbar, beispielsweise die Anordnung der Datenverarbeitungseinheit im Gehäuse eines der Sensoren und/oder mehrerer Sensoren in einem Gehäuse.

Mittels der Daten der Sensoren 2 und/oder der Bildanalyse durch das Grafikmodul 4 werden die jeweiligen Lagen bzw. Positionen der Objekte in der Welt und jeweils die Ausdehnung, insbesondere die Breite, der Objekte bestimmt. Auch werden die Fahrspuren anhand von Fahrbahnmarkierungen und/oder der Beobachtung von vorausfahrenden Fahrzeugen und/oder stehender Randobjekte bestimmt. Für die Fahrspur des Ego-Kraftfahrzeuges ist es weiterhin möglich, aus den Steuersignalen des Fahrers, beispielsweise Lenkbewegungen und/oder Betätigungen der Fußpedale, aus den Eigenbewegungssignalen des Kraftfahrzeuges, beispielsweise Geschwindigkeit, Gierrate, Querbeschleunigung, Wanken etc., Rückschlüsse auf den Verlauf der Fahrspur zu ziehen.

Die Datenverarbeitungseinheit 1 ordnet die erfassten Objekte und die Fahrspuren einander zu. Anschließend bestimmt die Datenverarbeitungseinheit 1 eine Relevanz der erfassten Objekte in Bezug auf das Ego-Kraftfahrzeug. In Abhängigkeit der bestimmten Relevanz werden Objekte und/oder Fahrspuren mit einer besonderen Bedeutung ausgewählt und mit geeigneten Markierungen versehen. Auf einem Monitor 5 wird das erfasste Videobild zusammen mit den zusätzlichen Markierungen dargestellt.

Schließlich sind Eingabeeinrichtungen 6 vorgesehen, über die ein Fahrer 7 mit dem Fahrerassistenzsystem in Interaktion treten kann. Die Interaktion des Fahrers 7 mit dem Fahrerassistenzsystem kann beispielsweise durch Betätigen von Gebern mit den Händen und/oder den Füßen oder durch sonstige detektierbare Körperbewegungen erfolgen. Dies können Schwerpunktverlagerung, Kopfnicken oder Kopfdrehen sein. Ferner ist eine Interaktion durch Blicksteuerung mit den Augen des Fahrers 7 möglich. In diesem Fall ist eine weitere Kamera erforderlich, die die Augen des Fahrers 7 zwecks Blickrichtungsschätzung beobachtet.

Die Datenverarbeitungseinheit 1 generiert anhand der relevanten Objekte und Fahrspuren Steuersignale, die an entsprechende Aktuatoren 8 weitergeleitet werden. Die können beispielsweise Aktuatoren 8 zur Beschleunigung bzw. zum Abbremsen des Kraftfahrzeuges oder für das Lenksystem des Kraftfahrzeuges sein. Die Steuersignale können weiterhin akustische und/oder optische Warnsignale oder haptische Rückmeldungen an den Fahrer erzeugen, beispielsweise eine Rüttelbewegung des Lenkrades und/oder ein Gegendruck gegen das Gaspedal, wenn der Fahrer die Geschwindigkeit etwas reduzieren sollte.

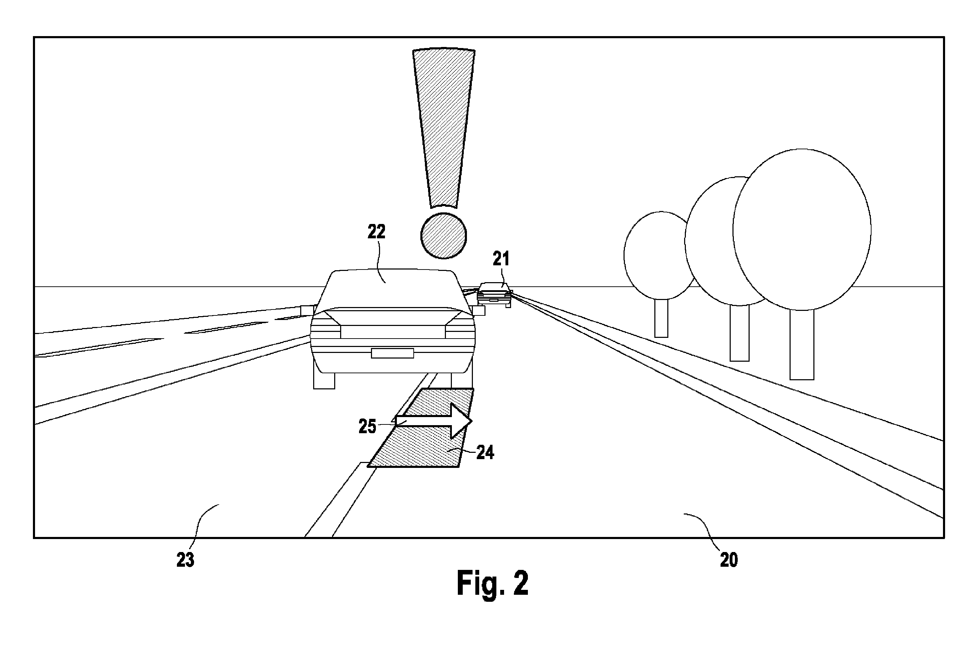

In der Figur 2 ist ein Beispiel für eine skizziert dargestellte Bildwiedergabe gezeigt. In der dort dargestellten Situation befindet sich vor dem Ego-Kraftfahrzeug (nicht dargestellt) in einem ausreichenden Abstand ein vollständig in derselben Fahrspur 20 vorausfahrendes Fahrzeug 21. Ein deutlich näheres Fahrzeug 22 in der linken Bildhälfte ist nicht der Fahrspur 20 des Ego-Kraftfahrzeuges, sondern einer linken Nachbarspur 23 zugeordnet, da es sich größtenteils in dieser befindet. Das erfindungsgemäße Fahrerassistenzsystem erkennt nun rechtzeitig, wenn das nähere Fahrzeug 22 in die Fahrspur 20 des Ego-Kraftfahrzeuges einschert und eine Veränderung der Objekt-Fahrspur-Zuordnung erforderlich macht.

In der Figur 2 zeigt die markierte Fläche 24 an, dass das nähere Fahrzeug 22 bereits in die eigene Fahrspur 20 des Ego-Kraftfahrzeugs eingetreten ist. Mit Hilfe des Pfeils 25 kann die relative Bewegungsrichtung angezeigt werden. Durch eine geeignete Farbauswahl, Symbolgröße und/oder zeitliche Veränderung, beispielsweise mittels Blinken, kann die Warnwirkung zusätzlich noch verstärkt werden, so dass die Warnhinweise auch im peripheren Sichtfeld des Fahrzeugführers noch ausreichend gut wahrgenommen werden.

Für die Bestimmung der Lage und des bevorstehenden Verlaufs von Fahrspurmarkierungen ist der Videosensor besonders gut geeignet, obwohl auch andere Sensoren für diese Aufgabe verwendet werden können, beispielsweise ein PMD-Sensor, ein Lidarsensor, ein Radarsensor oder ein Lichtlaufzeitsensor. Bei der Lichtlaufzeitmessung handelt es sich um das Messprinzip, bei dem durch eine flächenhafte oder linienhafte Anbringung mindestens einer Lichtlaufzeitmesszelle ein "Bild von Entfernungswerten" zu erzeugen, das auch als Tiefenbild bezeichnet werden kann.

Nachfolgend wird das erfindungsgemäße Verfahren erläutert. Mit den vorliegenden Informationen gemäß der Sensordaten und gemäß der Bilddaten ist es dann möglich, ein bestimmtes Objekt in der Umgebung oder spezieller im Vorfeld des Kraftfahrzeuges zum Verlauf der für das Kraftfahrzeug relevanten Fahrspur in Beziehung zu setzen. Der Begriff der Fahrspur ist hier verallgemeinert zu verstehen, muss also nicht zwangsläufig mit der baulich vorgesehenen Fahrspur übereinstimmen, sondern es kann auch den wahrscheinlichen Verlauf der vom Kraftfahrzeug befahrenen Fläche betreffen. Dies wird auch Fahrschlauch-Prädiktion genannt.

Bei dieser Beziehung zwischen dem Objekt und der Fahrspur sind folgende Informationen für die Interpretation der Verkehrssituation von besonderem Interesse:
- die relative laterale Lage des Objektes bezüglich der Fahrspur, beispielsweise beschrieben durch die Seite (rechts/links/mitte), auf der sich das Objekt befindet und ein Maß für die Überlappung des Objektes mit der Fahrspur.
- relative laterale Geschwindigkeit des Objektes bezüglich der Fahrspur unter Berücksichtigung der Richtung, in die sich das Objekt bewegt.
- die relative laterale Beschleunigung des Objektes bezüglich der Fahrspur.

Hierbei ist es nicht unbedingt notwendig, dass sich die Angaben auf die seitlichen Berandungen des Objektes beziehen. Denkbar ist auch das Heranziehen der lateralen Objektmittel. Ferner können auch von der Fahrspur unabhängige Größen für die Situationsinterpretation berücksichtigt werden, beispielsweise ein detektiertes Blinksignal eines Fahrtrichtungsanzeigers. Ferner können ein Aufleuchten eines Bremslichtes oder ein Blinken der Warnblickanlage eines Fahrzeuges erfasst werden. Hierdurch kann beispielsweise eine Beschleunigung aus Sicherheitsgründen verhindert werden, wenn auf der rechten Nachbarspur ein vorausfahrendes Fahrzeug nach links blinkt.

Weitere verwertbare Größen können der Längsabstand zu dem Objekt, die relative Längsgeschwindigkeit zu dem Objekt, d.h. die Geschwindigkeit der Annäherung oder Entfernung, die relative Längsbeschleunigung zu dem Objekt und die absolute Längsgeschwindigkeit und/oder Längsbeschleunigung des Objektes sein. Ferner können zusätzlich die eigene Geschwindigkeit und die eigene Beschleunigung für die Auswertung der Daten herangezogen werden. Schließlich kann der vorausgegangene Verlauf aller Signale, die Signalhistorie, von nicht unerheblicher Bedeutung sein, da dieser gegebenenfalls in eine Situationsinterpretation und/oder in einer Prädiktion eingehen kann.

Durch die Objekt-Spurzuordnung können neue kundenwertige Funktionen dargestellt werden, beispielsweise kann in einer adaptiven Geschwindigkeitsregulierung die Abstandsregelung die zusätzliche Information sinnvoll nutzen. Aus den zur Verfügung stehenden Daten kann berechnet werden, ob ein dem Kraftfahrzeug vorausfahrendes Fahrzeug, das sich langsam auf die Kraftfahrzeugspur hinbewegt, noch gefahrlos passiert werden kann, oder ob das Abbremsen hinter dem vorausfahrenden Fahrzeug die bessere Lösung darstellt. Hierbei sind Aspekte der Sicherheit, beispielsweise durch das Abbremsen drohender Auffahrunfälle, und des Komforts, beispielsweise die Höhe der erforderlichen Verzögerung, zu berücksichtigen.

Ferner ist die grafische Darstellung in dem Videobild für den Fahrer von Bedeutung, da durch die Markierung der Fahrer ein Information erhält, welche Objekte von dem Fahrerassistenzsystem zurzeit als relevant eingestuft werden. Dadurch wird das Verhalten bzw. die Funktion des Fahrerassistenzsystems für den Fahrer transparenter und verständlicher, da der Fahrer eine Information angezeigt bekommt, dass das Fahrerassistenzsystem gerade ein bestimmtes Objekt als relevant berücksichtigt, das in einem besonderen Verhältnis zu der Fahrspur des Ego-Kraftfahrzeuges steht.

Doch auch ohne eine automatische Steuerung des Kraftfahrzeuges ist die grafische Visualisierung nützlich, denn die Anzeigen in der grafischen Benutzerschnittstelle bzw. auf dem Monitor 5 können so ausgelegt werden, dass sie dem Fahrer zu besonders geeigneten Zeitpunkten entsprechende Vorschläge bzw. Fahrhinweise unterbreiten, auf die sich verändernde Verkehrssituation zu reagieren. Dies kann beispielsweise die Angabe sein, im richtigen Moment nach einem Ausschervorgang erneut zu beschleunigen oder bei einem deutlich langsameren Einscherer frühzeitig beherzt bzw. kräftig abzubremsen.

## Patentansprüche

1. Verfahren für ein Fahrerassistenzsystem eines Kraftfahrzeuges, bei dem in einer Umgebung des Kraftfahrzeuges Fahrspuren und Objekte erfasst, die Fahrspuren und die Objekte einander zugeordnet werden und eine Relevanz der Fahrspuren und der Objekte in Bezug auf das Kraftfahrzeug bestimmt wird, **dadurch gekennzeichnet, dass** für die Bestimmung der Relevanz der einzelnen Objekte eine tatsächliche Veränderung oder eine wahrscheinliche Veränderung der Zuordnung des Objektes zu einer bestimmten Fahrspur berücksichtigt wird.

2. Verfahren nach Anspruch 1, **dadurch gekennzeichnet, dass** in Abhängigkeit der bestimmten Relevanz Steuersignale erzeugt werden.

3. Verfahren nach Anspruch 1 oder 2, **dadurch gekennzeichnet, dass** mittels einer Anzeigevorrichtung die für das Kraftfahrzeug relevanten Fahrspuren und Objekte dargestellt werden.

4. Verfahren nach einem der vorstehenden Ansprüche, **dadurch gekennzeichnet, dass** bei der Zuordnung eine relative laterale Lage des Objektes zu der bestimmten Fahrspur berücksichtigt wird.

5. Verfahren nach einem der vorstehenden Ansprüche, **dadurch gekennzeichnet, dass** bei der Zuordnung eine relative laterale Geschwindigkeit des Objektes zu der bestimmten Fahrspur berücksichtigt wird.

6. Verfahren nach einem der vorstehenden Ansprüche, **dadurch gekennzeichnet, dass** bei der Zuordnung eine relative laterale Beschleunigung des Objektes zu der bestimmten Fahrspur berücksichtigt wird.

7. Verfahren nach einem der vorstehenden Ansprüche, **dadurch gekennzeichnet, dass** bei der Zuordnung ein von dem Objekt ausgehendes optisches Signal berücksichtigt wird.

8. Fahrerassistenzsystem für ein Kraftfahrzeug mit:
- Sensoren zur Erfassung von Fahrspuren und Objekten in einer Umgebung des Kraftfahrzeuges,
- einer Datenverarbeitungseinheit, die eingerichtet ist, die Fahrspuren und die Objekte einander zuzuordnen und eine Relevanz der Fahrspuren und der Objekte in Bezug auf das Kraftfahrzeug zu bestimmen,
**dadurch gekennzeichnet, dass** die Datenverarbeitungseinrichtung eingerichtet ist, für die Bestimmung der Relevanz der einzelnen Objekte eine tatsächliche Veränderung oder eine wahrscheinliche Veränderung der Zuordnung des Objektes zu einer bestimmten Fahrspur zu berücksichtigen.

9. Fahrassistenzsystem nach Anspruch 8, **dadurch gekennzeichnet, dass** die Datenverarbeitungseinrichtung eingerichtet ist, in Abhängigkeit der Relevanz Steuersignale zu erzeugen.

10. Fahrerassistenzsystem nach Anspruch 8 oder 9, **gekennzeichnet durch** eine Anzeigevorrichtung zur Darstellung der für das Kraftfahrzeug relevanten Fahrspuren und Objekte.

11. Fahrassistenzsystem nach einem der Ansprüche 8 bis 10, **dadurch gekennzeichnet, dass** die Anzeigevorrichtung einen Bildschirm, ein Head-Up-Display und/oder einen Frontscheibenprojektor aufweist.

12. Fahrerassistenzsystem nach einem der Ansprüche 8 bis 11, **dadurch gekennzeichnet, dass** die Sensoren für die Umgebung mindestens einen Videosensor, Infrarotsensor, Radarsensor, Lidarsensor, Ultraschallsensor, Sensor zur Lichtlaufzeitmessung und/oder PMD-Sensor aufweisen.
